**Europäisches Patentamt**

**European Patent Office**

**Office européen des brevets**

(19)

(11) Veröffentlichungsnummer : **0 073 004**
**B1**

(12) **EUROPÄISCHE PATENTSCHRIFT**

(45) Veröffentlichungstag der Patentschrift :
26.03.86

(51) Int. Cl.⁴ : **G 06 F   9/26**

(21) Anmeldenummer : **82107477.0**

(22) Anmeldetag : **17.08.82**

(54) **Zentraleinheit eines digitalen Mehrbit-Rechensystems.**

(30) Priorität : **26.08.81 DE 3133742**

(43) Veröffentlichungstag der Anmeldung :
**02.03.83 Patentblatt 83/09**

(45) Bekanntmachung des Hinweises auf die Patenterteilung : **26.03.86 Patentblatt 86/13**

(84) Benannte Vertragsstaaten :
**AT BE CH DE FR GB IT LI LU NL SE**

(56) Entgegenhaltungen :
**GB-A-  910 006**
**MICROPROCESSORS AND MICROSYSTEMS, Band 4,**
**Nr. 2 März 1980, Seiten 57-62, London, GB I. DOGAN:**
**"Design of a microprogrammable computer with bit-**
**slice devices"**
**IBM TECHNICAL DISCLOSURE BULLETIN, Band 16,**
**Nr. 4, September 1973, Seiten 1106-1108 D.K. HAR-**
**DIN: "READ-ONLY STORAGE CONTROL FOR HIGH-**
**SPEED INSTRUCTION EXECUTION"**

(73) Patentinhaber : **Müller, Otto**
**Am Guckenbühl 10**
**D-7750 Konstanz 16 (DE)**

(72) Erfinder : **Müller, Otto**
**Am Guckenbühl 10**
**D-7750 Konstanz 16 (DE)**

(74) Vertreter : **Riebling, Günter, Dr. et al**
**Patentanwälte Dr.-Ing., Dipl.-Ing., Ing.(grad) Günter**
**Riebling Dr.-Ing., Dipl.-Ing. Peter Riebling Rennerle**
**10 Postfach 3160**
**D-8990 Lindau (Bodensee) (DE)**

**Beschreibung**

Die Erfindung betrifft eine Zentraleinheit nach dem Oberbegriff des Patentanspruchs 1.

Eine derartige Zentraleinheit ist beispielsweise mit der Druckschrift « Microprocessors & microsystem. Vol. 4 (1980.02) No. 2 Seite 57 bis 62 » bekannt geworden.

Die Abarbeitung von Befehlen in einem digitalen Mehrbit-Rechensystem geht folgendermassen. Das Befehlswort ist ein Wort des interpretierten Maschinencodes, des Befehlssatzes, den der Anwender-Programmierer normalerweise als Befehlssatz der Maschine ansieht. Dieser Anwenderbefehl besteht beispielsweise maschinentypisch aus 32 Bit, wobei ein OP-Code aus 8 Bit enthalten ist, ferner ein Adress-Modifikationsteil mit 4 Bit und ein Adressteil mit 20 Bit. Ein Befehlswort ist maschinentypisch, also beispielsweise 32 Bit lang, und wird von einem bestimmten Teil des Micro-Programms aus dem Speicher geholt und von einem anderen Teil des Micro-Programms decodiert und in die Ausführung eingeleitet.

Bekannte Rechnersystem-Architekturen verwenden eine Decodierung derart, daß entsprechend der Anzahl der OP-Codes nach verschiedenen Einsprungstellen im Microprogramm verzweigt wird. Der Nachteil ist ein sehr großes und speicherplatzaufwendiges Microprogramm und ein entsprechend großes Microprogramm.

Nimmt man beispielsweise an, daß jeder Anwenderbefehl nur vier Micro-Befehle zur Ausführung braucht, dann hat man mit 256 verschiedenen Anwenderbefehlen, die bei einem Microprogramm ohne weiteres üblich sind, schon eine Anzahl von 1 025 Microbefehlen. Damit besteht also der Nachteil, daß der Micro-Befehlssatz im Speicher zu umfangreich wird und viel Speicherplatz belegt. Die Implementierung eines solchen Programms in einem PROM-Speicher wird zu teuer, weil zu viel Speicherplatz benötigt wird.

Gemäss Figur 6 der genannten Druckschrift fehlt eine Rückführung von am Ausgang des Pipeline-Registers anstehenden Befehlsworten auf den Decodierspeicher (dort Mapping ROM) genannt. Aus diesem Grunde sieht das bekannte Microprogramm Rücksprünge vor, wie sie sich aus Figur 8 dieser Druckschrift ergibt.

Die Erfindung hat sich die Aufgabe gestellt, die Decodierung des Befehlscodes zu lösen, daß speicherplatzaufwendige Hin- und Rücksprungadressen im Microprogramm vermieden werden.

Zur Lösung der gestellten Aufgabe ist die Erfindung dadurch gekennzeichnet, daß eine mehrfache, nacheinanderfolgende Decodierung unter Vermeidung von Rücksprüngen im Mikroprogramm dadurch erreicht ist, daß ein Teil des am Ausgang des Pipeline-Registers erscheinenden Mikroprogramm-Wortes auf den Eingang des Dekodierspeichers zurückgeführt ist und dort als zusätzliche Adressen bits verwendet wird.

Die vorliegende Erfindung beschreitet also einen ganz neuen Weg in der Decodierung, weil nach dem Stand der Technik die Decodierung in anderer Weise erfolgte. Nach dem Stand der Technik gelangen verschiedene Anwenderbefehle auf eine bestimmte Decodierstufe, wo sie sofort, entsprechend der Anzahl der verschiedenen OP-Codes, in Zweige verzweigt werden. Es erfolgt also nicht ein gemeinsames Durchlaufen gleicher Micro-Befehlsfolgen, wie es bei der vorliegenden Erfindung der Fall ist.

Gleiche Befehlsfolgen können bei bekannten Decodierverfahren im Stand der Technik nur mit der bekannten Unterprogrammtechnik angesprungen und durchlaufen werden. Hier entsteht aber durch die verschiedenen Hin- und Rücksprungsbefehle eine große Speicherplatzbewegung und ein großer Speicherplatzbedarf.

Im Vergleich zu der bekannten Zentraleinheit benötigt eine Zentraleinheit nach der vorliegenden Erfindung lediglich einen Speicherplatz von 10 bis 20 % der Kapazität des Speicherplatzbedarfes der bekannten Zentraleinheit.

Bei der vorliegenden Erfindung findet die Decodierung nicht nur einmal statt (wie dies aus dem Stand der Technik bekannt ist), sondern mehrfach serienweise hintereinandergeschaltet. Bei der vorliegenden Erfindung wird also nicht nach einer vom Maschinencode vorgegebenen Rücksprung-Adresse zurückgesprungen, sondern in einen von der Decodierstufe angegebenen weiteren, gemeinsamen Teil des Microprogramms. Bei dem erfindungsgemäss vorgeschlagenen Verfahren fehlen also die Rücksprünge im Microprogramm, die beim Stand der Technik vorhanden waren, weil bei der vorliegenden Erfindung eine mehrfache, nacheinanderfolgende, serielle Decodierung stattfindet, während beim Stand der Technik nur eine einmalige Decodierung stattfindet.

Der Unterschied des Verfahrens nach der vorliegenden Erfindung zum Stand der Technik besteht also darin, daß unabhängig vom Absprung nur entsprechend der Decodierstufe und dem OP-Code verzweigt wird und keine Rückkehradressen wie bei der Unterprogrammtechnik verwendet werden.

Eine Schaltung zur Ausführung des neuen Betriebsverfahrens sieht eine Hintereinanderschaltung eines OP-Code-Registers mit einem Decodierspeicher vor, der mehrere, von einem Micro-Befehl auswählbare, Decodierstufen erlaubt und einem dahinter nachgeschalteten Befehlszähler, der die von dem Decodierspeicher ausgegebenen Informationen aufnimmt, die Verzweigungen vornimmt und auf den Programmspeicher einwirkt.

Durch die Rückführung eines Teils des am Ausgang des Pipeline-Registers erscheinenden decodierten Befehlswortes auf den Eingang des Decodierspeichers werden die vorher bekannten Rücksprünge vermieden, denn der Decodierspeicher weist jetzt durch das am Eingang anliegende Teilwort, daß jetzt beispielsweise eine Verzweigung gefordert ist, und steuert dementsprechend den nachgeschalteten Befehlszähler an.

Im folgenden wird die Erfindung anhand einer lediglich einen Ausführungsweg darstellende Zeichnung näher erläutert.

Es zeigt:

Figur 1 verschiedene Anwenderbefehle mit Darstellung eines Microbefehls und des darin enthaltenen Anwendercodes,

Figur 2 schematisierte Darstellung der Decodierung nach der Erfindung,

Figur 3 eine nach dem Verfahren der Erfindung arbeitende Zentraleinheit;

Figur 4 und Fig. 5 Darstellung des Decodierverfahrens nach dem Stand der Technik.

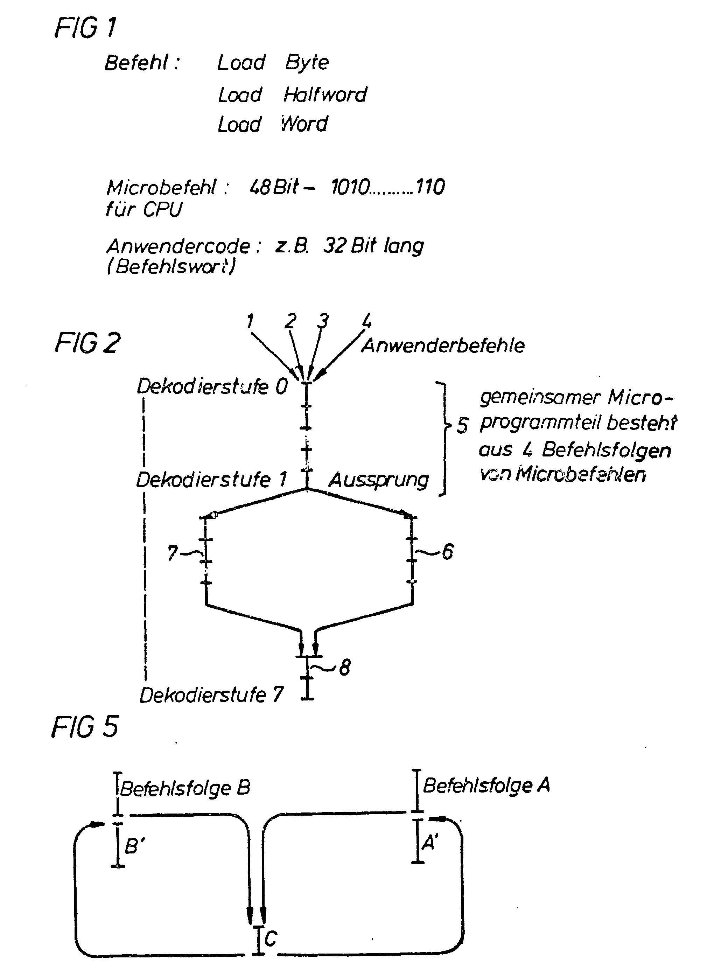

Die in Fig. 1 gezeigten Anwenderbefehle haben eine Gemeinsamkeit — es müssen Daten aus dem Speicher geholt werden. Erst die folgenden Micro-Befehle steuern dann die Multiplexer entsprechend an, um die entsprechenden Daten in das Rechenwerk einzuspeisen.

In Fig. 1 ist ein Micro-Befehl schematisiert gezeichnet. Er besteht maschinentypisch aus 48 Bit und gibt die Ansteuerung in der Zentraleinheit an. In den Bit 1 bis 12 ist eine Sprungadresse oder ein Literal enthalten. In den Bit 25, 26, 27, 28 ist ein Vorcode für den Multiplexer enthalten. In den Bit 20, 19, 18, 17 ist die A-Adresse des Befehls und in den Bits 21, 22, 23, 24 die B-Adresse des Befehls und in den Bits 29 bis 39 sind Steuerbefehle für die Recheneinheit enthalten. Die letzten drei Bits sind Steuersignale für die Endaufschaltung der arthmetischen Recheneinheit und Bit 44 zeigt an, ob eine Multiplikation oder Division vorliegt. Mit Bit 41 wird die Generierung eines unmittelbaren Adresssignals zur Aufschaltung auf den Bus angezeigt, während mit Bit 22 Schreibdaten auf den Bus aufgeschaltet und mit Bit 43 eine Zyklus-Dehnung gemacht wird, das heißt, es kann der Taktzyklus der zentralen Recheneinheit gedehnt werden.

Über den Datenbus 9 werden 32 bit breite Daten- und Befehlsworte übertragen. Der Anwenderbefehl wird mittels Mikrobefehlen interpretiert.

Ein Anwenderbefehl besteht beispielsweise maschinentypisch aus 32 Bit, wobei ein OP-Code aus 8 Bit enthalten ist, ein Adress-Modifikationsteil aus 4 Bit und ein Adressenteil aus 20 Bit.

In Fig. 2 ist die Decodierung nach dem erfindungsgemässen Verfahren dargestellt. Die Anwenderbefehle 1, 2, 3, 4 haben alle einen gemeinsamen Micro-Programmteil 5, der aus beispielsweise 4 Befehlsfolgen von Micro-Befehlen besteht.

In der Decodierstufe Null wird also der gemeinsame Micro-Programmteil 5 von allen Anwenderbefehlen gemeinsam durchlaufen. Die restlichen Befehlsfolgen sind nicht gemeinsam, so daß in der Decodierstufe 1 ein Aussprung zu verschiedenen anderen Microbefehlsfolgen 6, 7 erfolgt. Auch hier sind wiederum mehrere Befehlsfolgen gemeinsam, die dann wieder in der Micro-Befehlsfolge 8 Übereinstimmung zeigen und dort wieder zusammenlaufen, das heisst also, dort über einen normalen Sprungbefehl zusammengeführt werden. In der Decodierstufe 2 wird also die gemeinsame Microbefehlsfolge 8 wiederum von allen Anwenderbefehlen gemeinsam durchlaufen. Die Verzweigungen bzw. das gemeinsame Durchlaufen von Microbefehlsfolgen erfolgt bis zur Decodierstufe 7.

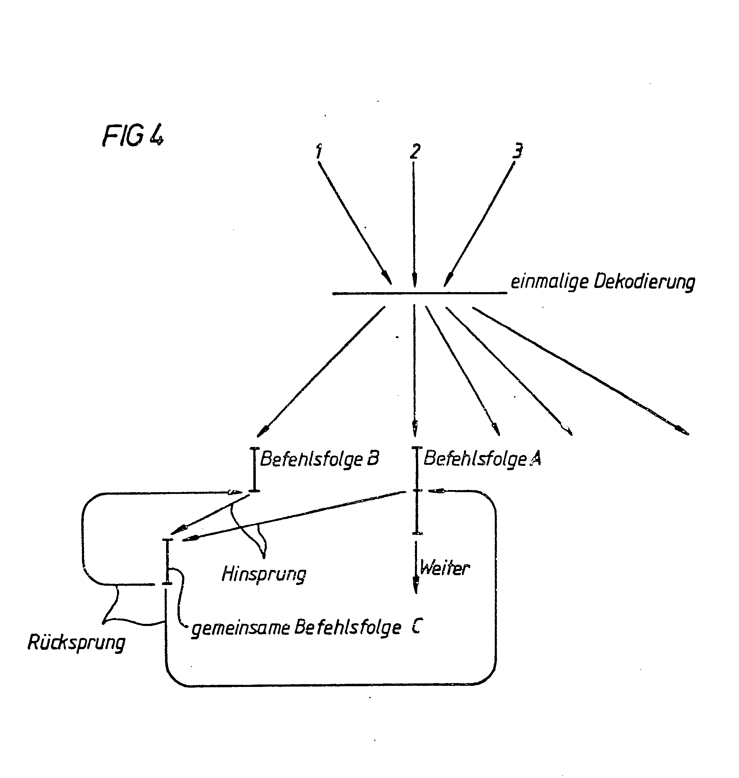

Zur Illustration der vorliegenden Erfindung sind in den Figuren 4 und 5 die Decodierverfahren nach dem Stand der Technik dargestellt. Aus Fig. 4 ist sichtbar, daß die Anwenderbefehle 1, 2, 3 einer gemeinsamen und einmaligen Decodierung zugeführt werden, wo sie endgültig verzweigt werden. Die nach dieser Decodierung entstandenen Microbefehlsfolgen sind also alle unterschiedlich und durchlaufen z. B. die Befehlsfolge A und die Befehlsfolge B. Wenn nun eine gemeinsame Befehlsfolge C durchlaufen werden soll, dann muss vom Ende der Befehlsfolge B aus ein Hinsprung zum Beginn der Befehlsfolge C und nach Durchlaufen der Befehlsfolge C ein Rücksprung zum Ende der Befehlsfolge B bzw. Befehlsfolge A durchgeführt werden.

Die Fig. 5 zeigt die gleichen Verhältnisse in anderer graphischer Darstellung. Zusätzlich ist in der Fig. 5 noch zu sehen, daß nach dem Rücksprung aus der gemeinsamen Befehlsfolge C eine andere Befehlsfolge B' oder A' durchlaufen wird, die wiederum unterschiedlich ist. Soll vom Ende der Befehlsfolge A' und B' wiederum ein gemeinsamer Programmteil durchlaufen werden, dann sind wiederum Hin- und Rücksprünge erforderlich.

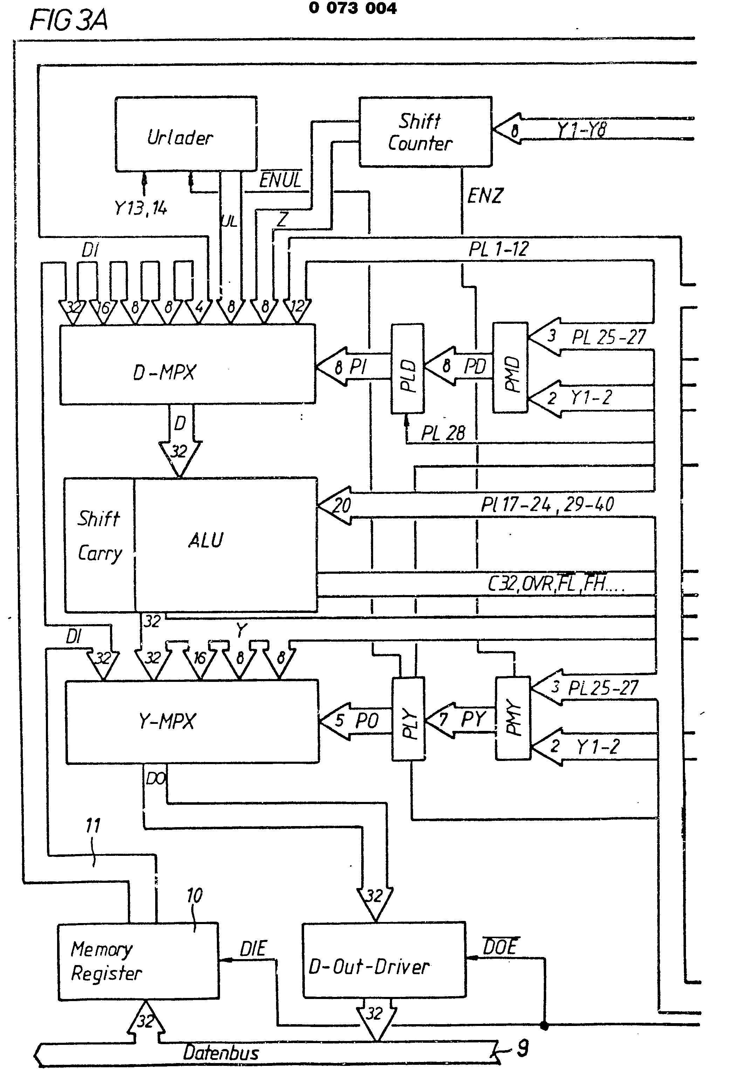

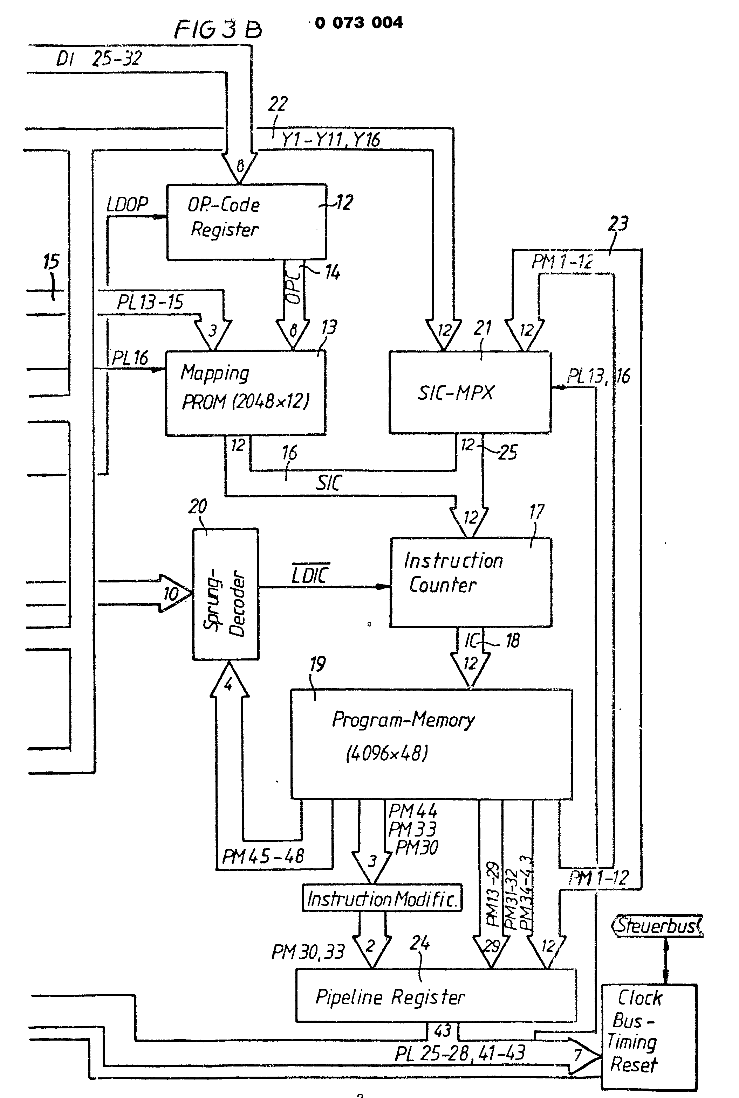

Diese Hin- und Rücksprünge werden bei der vorliegenden Erfindung gemäss der Darstellung in Fig. 2 vermieden. Bei der vorliegenden Erfindung ist eine achtfache serienweise hintereinandergeschaltete Decodierung vorgesehen. In Fig. 3 ist ein Rechenwerk zur Ausführung dieser Decodierung dargestellt. Die vom Speicher ausgegebenen Daten werden über einen Datenbus 9 einem Speicherregister 10 zugeführt, das für alle Datenübertragungen, die dem Speicher, der arithmetischlogischen Einheit (ALU) und den Steuerregistern herangezogen wird. Die in das Speicherregister 10 eingespeisten Daten gehen über einen internen Bus 11 in das zentrale Rechenwerk, wo die Bits 25 bis 32 gesondert in das OP-Code-Register 12 geladen werden und dort als Adress-Bits für den nachgeschalteten Decodierspeicher 13 verwendet werden. Die Adress-Bits werden gemäss der Darstellung einmal über einen Bus 14 auf den Decodierspeicher 13 gegeben und zum anderen werden drei Bits des Microprogramm-Wortes über einen Bus 15 vom Ausgang des Pipeline-Registers 24 kommend ebenfalls auf den Decodierspeicher 13 als weitere Adressleitung geschaltet. Am Eingang des Decodierspeichers 13 steht also eine 11-Bitbreite Adresse an, die aus 8 Bit aus dem OP-Code-Register kommt und 3 Bit direkt aus dem Microprogramm-Wort, das von dem dem Programmspeicher 19 nachgeschalteten Pipeline-Register 24 erzeugt wird.

Entsprechend dieser 11-Bit-breiten Adresse wird aus dem Decodierspeicher 13 ein Wort ausgewählt ; dieses ausgewählte Wort steht am Ausgang des Decodierspeichers 13 zur Verfügung und wird als Sprungadresse auf den Befehlszähler 17 über den Steuerbus 16 im Falle eines so ausgewählten Decodiersprunges aufgeschaltet. Nach dem Sprung entsprechend dieser Befehlsadresse setzt das Programm dann die Abarbeitung dieser Stelle fort. Der Befehlszähler 17 schalter über seinen Steuerbus 18 auf den Programmspeicher 19, und die entsprechende Verzweigung ist durchlaufen.

Durch das Laden des Befehlszählers 17 mit diesem aus dem Decodierspeicher 13 kommenden 12-Bit ist die Verzweigung erfolgt, das heisst, der Microprogramm-Befehlszähler 17 befindet sich dann auf der neuen angesteuerten Befehlsfolge. Die Befehlsfolge war in Figur 2 mit 6 und 7 bezeichnet worden.

Dort werden diese Befehls-Bit, die aus dem Programmspeicher 19 kommen, zwischengespeichert, um die ganzen Laufzeiten, die sich im System befinden, auf jeweils aufeinanderfolgende Takte aufzuteilen.

Der Sprungdecoder 20 wählt aus, ob überhaupt gesprungen wird, und — falls ja — nach welcher Bedingung. Es sind hier insgesamt 16 Bedingungen möglich. Nach dem Sprung wird der Befehlszähler um 1 erhöht und die Befehlsfolge setzt sich um eine um 1 erhöhte Adresse fort.

In den Figuren 4 und 5 sind die Verhältnisse nach dem Stand der Technik dargestellt. Von der Befehlsfolge 1, 2, 3, ausgehend erfolgt eine Decodierung in die Befehlsfolgen A und B, die verschieden voneinander sind. Soll nun die gemeinsame Befehlsfolge C durchlaufen werden, so ist ein Hinsprung erforderlich, un nach dem Durchlaufen dieser gemeinsamen Befehlsfolge C auch ein Rücksprung an das Ende der Befehlsfolge B bzw. A.

Bei der vorliegenden Erfindung wird hingegen nicht nach der Rücksprung-Adresse zurückgesprungen, sondern in einen von der Decodierstufe angegebenen weiteren gemeinsamen Teil. Bei der vorliegenden Erfindung fehlen also die Rücksprünge, die beim Stand der Technik gemäss den Figuren 4 und 5 vorhanden waren, weil bei der Erfindung eine mehrfache, nacheinanderfolgende und damit serielle Decodierung stattfindet.

Neu bei der vorliegenden Erfindung ist also, daß aus einem OP-Code-Register 12 mehrere Decodierstufen abgeleitet werden, und zwar über die Datenleitung 14 und 15 einem Decodierspeicher 13 zugeführt werden. Der Decodierspeicher 13 erzeugt an seinen Ausgängen Adressen, die in den Befehlszähler 17 eingespeist werden und damit die entsprechenden Verzweigungen ausführen. Kern der vorliegenden Erfindung ist also die Hintereinanderschaltung eines OP-Code-Registers mit einem Decodierspeicher, der mehrere, von einem Microbefehl auswählbare Decodierstufen erlaubt und einen dahinter nachgeschalteten Befehlszähler, der die vom Decodierspeicher 13 ausgegebenen Informationen aufnimmt, die Verzweigungen vornimmt und auf den Programmspeicher 19 einwirkt.

In der Fig. 3 ist noch ein Multiplexer 21 (Select-Instuction-Counter) vorhanden, der entweder die errechneten Sprünge für den Bus 22 oder die unbedingten Sprünge für den Bus 23 auswählt und dem Befehlszähler 17 zuführt. Dies ist also eine andere Art der Zuführung von Adressen zu dem Befehlszähler 17.

Die vorliegende Erfindung ist nicht auf einen 32 Bit langen Anwendercode beschränkt ; es ist ebenso möglich, die vorgeschlagene Rechnerarchitektur auf einem 16-Bit- oder einem 8-Bit-Rechner durchzuführen.

**Patentansprüche**

1. Zentraleinheit eines digitalen Mehrbit-Rechensystems, bestehend aus Speicherelementen, Rechenschaltkreisen, einem Steuerblock, sowie Ein- und Ausgabekanälen, wobei Daten von einem Datenbus (9) in ein Speicherregister (10) eingespeist werden und jedes Befehlswort einen Operationscode enthält, der von dem Speicherregister (10) über einen internen Bus (11) in ein Operationscode-Register (12) eingegeben wird, das Adressenbits einem nachgeschalteten Dekodierspeicher (13) zuführt, der mit seinem Ausgang auf den ladbaren Befehlszähler (17) geschaltet ist, der seinerseits mit seinem Ausgang auf den Programmspeicher (19) geschaltet ist, dem ein Pipeline-Register (24) zur Speicherung eines Mikroprogramm-Wortes nachgeschaltet ist, dadurch gekennzeichnet, daß eine mehrfache, nacheinanderfolgende Decodierung unter Vermeidung von Rücksprüngen im Mikroprogramm dadurch erreicht ist, daß ein Teil des am Ausgang des Pipeline-Registers (24) erscheinenden Mikroprogramm-Wortes auf den Eingang des Dekodierspeichers (13) zurückgeführt ist und dort als zusätzliche Adressen bits verwendet wird.

2. Zentraleinheit nach Anspruch 1, dadurch gekennzeichnet, daß der Eingang des Befehlszählers (17) durch den Ausgang des Decodierspeichers (13) und durch den Ausgang eines Auswahlbefehlszählers (21) gebildet ist.

**Claims**

1. Central unit of a digital multi-bit calculation system consisting of memory elements, calculation circuits, a data control block together with input and output channels whereby data from a databus (9) is fed into a memory register (10) and every instruction word contains an operations code which is entered into an operations code register (12) through an internal bus (11) which leads the addressing bits to a subsequent decoder memory (13) whose output is connected to the chargeable instruction counter (17) which itself has its output connected to the program register (19) to which is subsequently connected a pipeline register (24) for the storage of a micro-program word characterized as : that a multiple consecutive decoding is achieved avoiding data return in the micro-program in that a part of the micro-program word appearing at the output of the pipeline register (24) is led back to the input of the decoder memory (13) and there used as extra address bits.

2. Central unit according to Claim 1 characterized as : that the input of the instruction counter (17) is formed from the output of the decoder memory (13) and an instruction selection counter (21).

**Revendications**

1. Unité centrale d'un système digital à calculer à bits multiples, composée d'éléments accumulateurs, de circuits de commutation à calculer, d'un bloc de commande, ainsi que de voies d'entrée et de sortie, dans laquelle des données sont alimentées à partir d'un bus de données (9) dans un registre de mémoire et tous les mots d'ordre contiennent un code d'opération alimenté à partir du registre (10) par l'intermédiaire d'un bus interne (11) dans un registre de code d'opération (12), qui amène des bits d'adresse à une mémoire de décodage, dont la sortie est reliée avec le compteur ordinal chargeable (17), qui à son tour avec sa sortie est relié avec la mémoire de programme (19, à laquelle est intercalée en arrière un registre de pipe-line (24) pour la mise en mémoire d'une instruction de micro-programme, caractérisée en ce qu'un décodage multiple et consécutif, en évitant des mouvements de retour dans le micro-programme, est obtenu par le fait qu'une partie de l'instruction de micro-programme apparaissante à la sortie du registre de pipe-line (24) est ramenée à l'entrée de la mémoire de décodage (13) et y est usée comme bits additionnels d'adresse.

2. Unité centrale conformément à la revendication 1, caractérisée en ce que l'entrée du compteur ordinal (17) est constituée par la sortie de la mémoire de décodage (13) et par la sortie d'un compteur ordinal de sélection (21).

## FIG 1

Befehl :    Load   Byte

Load   Halfword

Load   Word


Microbefehl :   48 Bit — 1010.........110
für CPU

Anwendercode :  z.B.  32 Bit lang
(Befehlswort)

## FIG 2

1  2  3  4   Anwenderbefehle

Dekodierstufe 0

Dekodierstufe 1   Aussprung

gemeinsamer Micro-
5 programmteil besteht
aus 4 Befehlsfolgen
von Microbefehlen

7     6

8

Dekodierstufe 7

## FIG 5

Befehlsfolge B        Befehlsfolge A

B'          A'

C

FIG 3A

0 073 004

FIG 3 B      **0 073 004**

FIG 4